(19) Europäisches Patentamt
European Patent Office
Office européen des brevets

(11) **EP 4 269 479 A1**

(12) **EUROPEAN PATENT APPLICATION**
published in accordance with Art. 153(4) EPC

(43) Date of publication:
**01.11.2023 Bulletin 2023/44**

(21) Application number: **21910512.9**

(22) Date of filing: **15.12.2021**

(51) International Patent Classification (IPC):
*C08J 5/14* (2006.01)    *F16D 65/092* (2006.01)
*F16D 65/095* (2006.01)

(52) Cooperative Patent Classification (CPC):
**B24D 3/22; F16D 65/092; F16D 65/095**

(86) International application number:
**PCT/JP2021/046209**

(87) International publication number:
**WO 2022/138364 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2020 JP 2020213389**

(71) Applicant: **Nichias Corporation
Tokyo 104-8555 (JP)**

(72) Inventors:
• **KONDOH, Junichi
Tokyo 104-8555 (JP)**
• **ANEGAWA, Toshiharu
Tokyo 104-8555 (JP)**
• **ARAI, Tadashi
Tokyo 104-8555 (JP)**

(74) Representative: **Grünecker Patent- und
Rechtsanwälte
PartG mbB
Leopoldstraße 4
80802 München (DE)**

(54) **SHIM FOR DISC BRAKES, AND DISC BRAKE**

(57)    A novel disc brake shim and disc brake that can effectively suppress occurrence of vibration and squeal, are easy to manufacture and have excellent quality stability are provided. The disc brake shim includes a base material layer formed of a metal sheet, and a rubber layer that is laminated and disposed on at least a part of a main surface on one side of the base material layer and contains pores derived from a plurality of hollow microcapsules inside, and the disc brake includes pad materials on both sides in an axial direction of a disc rotor, and shims on opposite sides from the disc rotor, of the pad materials adjacently, wherein each of the shims is the disc brake shim of the present invention.

[Fig.1]

**Description**

[Technical Field]

The present invention relates to a disc brake shim and a disc brake.

[Background Art]

In general, disc brakes are widely used in automobiles and the like (refer to Patent Literature 1 (Japanese Patent Laid-Open No. 2010-31960), for example).

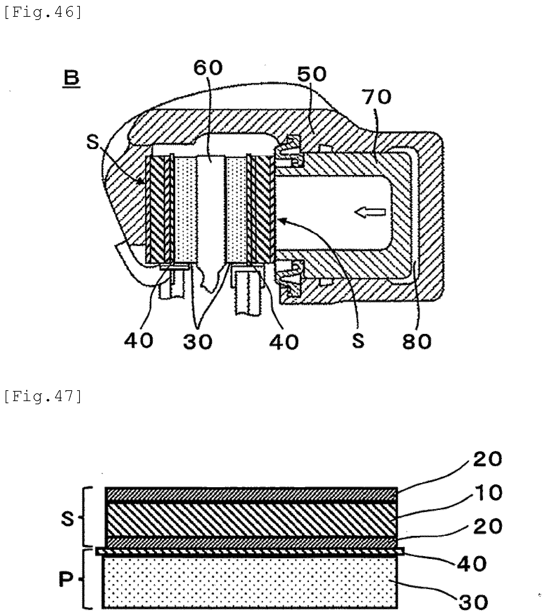

Figure 46 is a vertical sectional view in one exemplary mode of a disc brake. As illustrated in Figure 46, a disc brake B is structured such that it applies brakes by pressing brake pads 30 and 30 that are arranged on both sides in an axial direction of a disc rotor 60 that rotates integrally with a wheel, with a pressing member 70 formed of a piston and the like by hydraulic pressure of a brake oil 80 in a caliper 50, and pressing the brake pads 30 and 30 from both sides of the disc rotor 60.

If the brake pad 30 is directly pressed to the disc rotor 60 by the pressing member 70 during braking as described above, a back metal 40 of the brake pad and the pressing member 70 relatively move, and each part of the brake vibrates due to frictional vibration or the like that is generated between the brake pad 30 and the disc rotor 60, so that abnormal noise commonly referred to as squeal may occur.

[Citation List]

[Patent Literature]

[Patent Literature 1] Japanese Patent Laid-Open No. 2010-31960

[Summary of Invention]

[Technical Problem]

In order to prevent occurrence of such squeal, a shim S is interposed between a pad material P formed of the brake pad 30 and the back metal 40, and the pressing member 70, as illustrated in Figure 46 and Figure 47. As the shim S, a rubber coated metal (RCM) with thin rubber layers 20 and 20 fixed to surfaces of a metal sheet 10 formed of a stainless steel sheet, an iron sheet or a plated steel sheet is conceivable, as illustrated in Figure 46 and Figure 47. With such a shim S, it dampens the vibration causing squeal during braking due to compression by the pressing member 70 by using elasticity of the rubber layer 20.

However, according to the study by the present inventors, even the shim formed of the above described rubber-coated metal (RCM) cannot always sufficiently satisfy the needs of automobile users for comfort and quietness during driving, which have been increasing more and more in recent years, and therefore, there has been a demand for disc brake shims that can even more suppress vibrations causing squeal.

In order to solve the above described technical problem, the present inventors have reached the idea of adopting a rubber layer having a plurality of pores provided therein, as a rubber layer that is provided on the metal sheet that forms a disc brake shim.

However, as a result of investigations by the present inventors, it has been found that in the above described disc brake shim, when a chemically decomposable (thermally decomposable) foaming agent is used to form pores in the rubber layer, the decomposed gas does not remain in the rubber and escapes to the outside in many cases, and it is very difficult to control the expansion rate (pore ratio) of the resulting rubber layer.

Difficulty in controlling the above described expansion rate leads to a large variation in the thickness of the rubber layer and a variation in the vibration control performance, and there has been a demand for disc brake shims that are easy to manufacture and have excellent quality stability.

Accordingly, an object of the present invention is to provide a novel disc brake shim and disc brake that can effectively suppress occurrence of vibration and squeal, are easy to manufacture and have excellent quality stability.

[Solution to Problem]

As a result of earnest study conducted by the present inventors to attain the above described object, the present inventors have found that the above described technical problem can be solved by a disc brake shim having a base material layer formed of a metal sheet, and a rubber layer that is laminated and disposed on at least a part of a main surface on one side of the base material layer, and contains pores derived from a plurality of hollow microcapsules inside, and have completed the present invention based on the present findings.

In other words, the present invention provides

(1) a disc brake shim including a base material layer formed of a metal sheet, and a rubber layer that is laminated and disposed on at least a part of a main surface on one side of the base material layer and contains pores derived from a plurality of hollow microcapsules inside,

(2) the disc brake shim as set forth in (1) described above (hereinafter, properly referred to as a first disc brake shim according to the present invention) including a base material layer formed of a metal sheet, and the rubber layer that is laminated and disposed on at least a part of a main surface on one side of the base material layer, the rubber layer being an outermost layer once arranged,

(3) the disc brake shim as set forth in (2) described above, wherein a thickness of the rubber layer is 30 to 200 $\mu$m,

(4) the disc brake shim as set forth in (2) or (3) described above, wherein the rubber layer is a heat-treated product of a rubber composition coating layer containing 40 to 70% by mass of polymer with a Mooney value of 10 to 70, and 5 to 50% by mass of hollow microcapsules, in solid content conversion,

(5) the disc brake shim as set forth in any one of (2) to (4) described above, wherein the rubber layer is oriented to face a pad material or a pressing member at a time of arrangement,

(6) the disc brake shim as set forth in any one of (2) to (5) described above, wherein the disc brake shim is a base shim or a cover shim in a laminated shim in which the cover shim is laminated and disposed on the base shim,

(7) the disc brake shim as set forth in (1) described above (hereinafter, properly referred to as a second disc brake shim according to the present invention) including a laminated structure with three or more layers including at least a base material layer formed of a metal sheet, and the rubber layer laminated and disposed on a main surface on one side of the base material layer, the rubber layer being disposed as an intermediate layer of the laminated structure,

(8) the disc brake shim as set forth in (7) described above, wherein a thickness of the rubber layer is 30 to 200 $\mu$m,

(9) the disc brake shim as set forth in (7) or (8) described above, wherein the rubber layer is a heat-treated product of a rubber composition coating layer containing 40 to 70% by mass of polymer with a Mooney value of 10 to 70, and 5 to 50% by mass of hollow microcapsules, in solid content conversion,

(10) the disc brake shim as set forth in any one of (7) to (9) described above, wherein the disc brake shim is a base shim or a cover shim in a laminated shim in which the cover shim is laminated and disposed on the base shim, and

(11) a disc brake including pad materials on both sides in an axial direction of a disc rotor, and shims on opposite sides from the disc rotor, of the pad materials adjacently, wherein the shims are each the disc brake shim as set forth in any one of (1) to (10) described above.

[Advantageous Effects of Invention]

According to the present invention, it is considered that not only the rubber layer provided on the base material layer hardly transmits vibration of the brake pads and the like because the rubber layer has a low density with pores derived from a plurality of hollow microcapsules inside, but also the rubber layer deforms to follow the vibration of the brake pads and the like to easily convert the vibration into thermal energy because the rubber layer has flexibility, and further the rubber layer can easily convert vibration of an external member into frictional heat because the rubber layer has a high friction coefficient.

Further, in the rubber layer provided on the above described base material, a plurality of pores is easily formed inside while the pore ratio and thickness are easily controlled by using the plurality of hollow microcapsules.

Consequently, according to the present invention, it is possible to provide a novel disc brake shim and disc brake that can effectively suppress occurrence of vibration and squeal, are easy to manufacture and have excellent quality stability.

[Brief Description of Drawings]

[Figure 1] Figure 1 is a vertical sectional view showing an exemplary mode of a disc brake shim according to the present invention.

[Figure 2] Figure 2 is a vertical sectional view showing an exemplary mode of the disc brake shim according to the present invention.

[Figure 3] Figure 3 is a vertical sectional view showing an exemplary mode of the disc brake shim according to the present invention.

[Figure 4] Figure 4 is a vertical sectional view showing an exemplary mode of the disc brake shim according to the present invention.

[Figure 5] Figure 5 is a vertical sectional view showing an exemplary mode of the disc brake shim according to the present invention.

[Figure 6] Figure 6 is a vertical sectional view showing an exemplary mode of the disc brake shim according to the present invention.

[Figure 7] Figure 7 is a vertical sectional view showing an exemplary mode of the disc brake shim according to the present invention.

[Figure 8] Figure 8 is a vertical sectional view showing an exemplary mode of the disc brake shim according to the present invention.

[Figure 9] Figure 9 is a vertical sectional view showing an exemplary mode of the disc brake shim according to the present invention.

[Figure 10] Figure 10 is a vertical sectional view showing an exemplary mode of the disc brake shim according to the present invention.

[Figure 11] Figure 11 is a vertical sectional view showing an exemplary mode of the disc brake shim according to the present invention.

[Figure 12] Figure 12 is a vertical sectional view showing an exemplary mode of the disc brake shim according to the present invention.

[Figure 13] Figure 13 is a vertical sectional view showing an exemplary mode of the disc brake shim according to the present invention.

[Figure 14] Figure 14 is a vertical sectional view showing an exemplary mode of the disc brake shim according to the present invention.

[Figure 15] Figure 15 is a vertical sectional view showing an exemplary mode of the disc brake shim according to the present invention.

[Figure 16] Figure 16 is a vertical sectional view showing an exemplary mode of the disc brake shim according to the present invention.

[Figure 17] Figure 17 is a vertical sectional view showing an exemplary mode of the disc brake shim according to the present invention.

[Figure 18] Figure 18 is a vertical sectional view showing an exemplary mode of the disc brake shim according to the present invention.

[Figure 19] Figure 19 is a vertical sectional view showing an exemplary mode of the disc brake shim according to the present invention.

[Figure 20] Figure 20 is a vertical sectional view showing an exemplary mode of the disc brake shim according to the present invention.

[Figure 21] Figure 21 is a vertical sectional view showing an exemplary mode of the disc brake shim according to the present invention.

[Figure 22] Figure 22 is a vertical sectional view showing an exemplary mode of the disc brake shim according to the present invention.

[Figure 23] Figure 23 is a vertical sectional view showing an exemplary mode of the disc brake shim according to the present invention.

[Figure 24] Figure 24 is a vertical sectional view showing an exemplary mode of the disc brake shim according to the present invention.

[Figure 25] Figure 25 is a vertical sectional view showing an exemplary mode of the disc brake shim according to the present invention.

[Figure 26] Figure 26 is a vertical sectional view showing an exemplary mode of the disc brake shim according to the present invention.

[Figure 27] Figure 27 is a vertical sectional view showing an exemplary mode of the disc brake shim according to the present invention.

[Figure 28] Figure 28 is a vertical sectional view showing an exemplary mode of the disc brake shim according to the present invention.

[Figure 29] Figure 29 is a vertical sectional view showing an exemplary mode of the disc brake shim according to the present invention.

[Figure 30] Figure 30 is a vertical sectional view showing an exemplary mode of use of the disc brake shim according to the present invention.

[Figure 31] Figure 31 is a vertical sectional view showing an exemplary mode of use of the disc brake shim according to the present invention.

[Figure 32] Figure 32 is a vertical sectional view showing an exemplary mode of use of the disc brake shim according to the present invention.

[Figure 33] Figure 33 is a vertical sectional view showing an exemplary mode of use of the disc brake shim according to the present invention.

[Figure 34] Figure 34 is a vertical sectional view showing an exemplary mode of use of the disc brake shim according to the present invention.

[Figure 35] Figure 35 is a vertical sectional view showing an exemplary mode of the disc brake shim according to the present invention.

[Figure 36] Figure 36 is a vertical sectional view showing an exemplary mode of the disc brake shim according to the present invention.

[Figure 37] Figure 37 is a vertical sectional view showing an exemplary mode of the disc brake shim according to the present invention.

[Figure 38] Figure 38 is a vertical sectional view showing an exemplary mode of the disc brake shim according to the present invention.

[Figure 39] Figure 39 is a vertical sectional view showing an exemplary mode of the disc brake shim according to the present invention.

[Figure 40] Figure 40 is a vertical sectional view showing an exemplary mode of the disc brake shim according to the present invention.

[Figure 41] Figure 41 is a vertical sectional view showing an exemplary mode of use of the disc brake shim according to the present invention.

[Figure 42] Figure 42 is a vertical sectional view showing an exemplary mode of use of the disc brake shim according to the present invention.

[Figure 43] Figure 43 is a vertical sectional view showing an exemplary mode of use of the disc brake shim according to the present invention.

[Figure 44] Figure 44 is a vertical sectional view showing an exemplary mode of use of the disc brake shim according to the present invention.

[Figure 45] Figure 45 is a vertical sectional view showing an exemplary mode of use of the disc brake shim according to the present invention.

[Figure 46] Figure 46 is a vertical sectional view showing a schematic structure example of a disc brake.

[Figure 47] Figure 47 is a vertical sectional view showing an exemplary mode of a disc brake shim that is an object to be compared.

[Description of Embodiments]

A disc brake shim according to the present invention has a base material layer formed of a metal sheet, and a rubber layer that is laminated and disposed on at least a part of a main surface on one side of the base material layer and contains pores derived from a plurality of hollow microcapsules inside.

As the disc brake shim according to the present invention, one or more selected from a first disc brake shim according to the present invention and a second disc brake shim according to the present invention can be cited.

The first disc brake shim according to the present invention has a base material layer formed of a metal sheet, and the rubber layer that is laminated and disposed on at least a part of a main surface on one side of the base material layer, the rubber layer being an outermost layer once arranged.

Further, the second disc brake shim according to the present invention is formed of a laminated structure with three or more layers having at least a base material layer formed of a metal sheet, and the rubber layer that is laminated and disposed on a main surface on one side of the base material layer, the rubber layer being disposed as an intermediate layer of the above described laminated structure.

Hereinafter, the disc brake shim according to the present invention will be described while the first disc brake shim according to the present invention and the second disc brake shim according to the present invention that are exemplary modes of the disc brake shim of the present invention are properly mentioned.

In the present application documents, the disc brake shim means the one in a state in which respective adjacent layers forming the disc brake shim are chemically or physically fixed.

In the disc brake shim according to the present invention, the metal sheet forming the base material layer is not particularly limited, but it is possible to cite sheet materials formed of a stainless steel (ferritic, martensitic, austenitic, and the like), iron, a plating material, aluminum and the like, and a metal sheet formed of a sheet material formed of a stainless steel or iron is preferable.

In the disc brake shim according to the present invention, the metal sheet forming the base material layer may be formed by joining a plurality of metal sheets by pasting or the like, and as the metal sheet, a joined sheet of a stainless steel sheet and an iron sheet is preferable.

In the disc brake shim according to the present invention, a thickness of the metal sheet forming the base material layer is not particularly limited, but is normally 0.4 to 0.8 mm.

In the disc brake shim according to the present invention, the rubber layer contains pores derived from a plurality of hollow microcapsules inside.

A thickness of the rubber layer is preferably 30 to 200 $\mu$m, more preferably 50 to 200 $\mu$m, even more preferably 60 to 140 $\mu$m, and even more preferably 80 to 120 $\mu$m.

The thickness of the above described rubber layer means an arithmetic mean value at a time of thicknesses at 10 spots being measured by using a linear gauge (DG-925 made by Ono Sokki Co., Ltd.).

In the disc brake shim according to the present invention, the thickness of the rubber layer is within the above described range, and thereby it is possible to easily provide a disc brake shim having a desired density, and having a desired flexibility and friction coefficient.

The above described rubber layer is preferably a heat-treated product of a rubber composition coating layer (coating film of a rubber composition), and is porous because hollow portions of many hollow microcapsules blended in rubber become pores in the rubber.

A porosity of the above described rubber layer is preferably 10% to 85%, more preferably 15% to 80%, and even more preferably 25% to 75%.

In the present application documents, the above described porosity means a value calculated by an expression below.

$$\text{Porosity (\%)} = (1 - (\text{Thickness of rubber layer when compressed} / \text{Thickness of rubber layer})) \times 100$$

(Note that the thickness of the rubber layer means an arithmetic mean value at the time of the thicknesses at 10 spots being measured by using the aforementioned linear gauge, and the thickness of the rubber layer when compressed means an arithmetic mean value when the thicknesses at 10 spots are measured by using the aforementioned linear gauge, with respect to the rubber layer when compressed with a pressing force of 34.3 MPa.)

In the disc brake shim according to the present invention, the porosity of the rubber composition coating layer is within the above described range, and thereby it is possible to easily form the rubber layer having a desired density, flexibility and friction coefficient.

A rubber composition that forms the rubber composition coating layer preferably contains a polymer (rubber component) with a Moony value of 10 to 70, and more preferably contains a polymer with a Moony value of 20 to 60.

In the present application documents, the Moony value means a value that is measured by a method specified in JIS K6300-1 by using Mooney Viscometer SMV-201 made by Shimadzu Corporation.

When the Moony value of the polymer is less than 10, deformation of the polymer easily becomes excessive, and when the Moony value is more than 70 on the contrary, deformation of the polymer easily becomes insufficient.

As the polymer, it is possible to cite one or more selected from nitrile rubber (NBR), hydrogenated nitrile rubber (HNBR), fluororubber, ethylene propylene diene rubber (EPDM), acrylic rubber and the like, and one or more selected from nitrile rubber (NBR), hydrogenated nitrile rubber (HNBR), and fluororubber is preferable.

Furthermore, as the above described nitrile rubber (NBR), in order to give oil resistance, a nitrile rubber with an AN value (content of acrylonitrile group in NBR) of 39 to 52 is preferable, and a nitrile rubber with an AN value of 40 to 48 is more preferable.

The rubber composition coating layer contains the above described polymer, and thereby it is possible to easily obtain the rubber layer having desired properties.

The rubber composition coating layer preferably contains 40 to 70% by mass of the above described polymer, more preferably 45 to 65% by mass of the above described polymer, and even more preferably 50 to 60% by mass of the above described polymer, when converted to a solid content.

The rubber composition coating layer contains the above described polymer in the above described ratio, and thereby it is possible to effectively suppress loss of elasticity of the rubber layer due to compression during braking.

In the disc brake shim according to the preset invention, the rubber layer contains pores derived from a plurality of hollow microcapsules inside.

In the present application, the hollow microcapsules each means a microscopic container with a diameter of about 1 to 100 $\mu$m having a core shell structure, which is a granular container with a cavity-like (hollow) core portion covered with a shell portion formed of a wall material.

As the above described hollow microcapsules, it is possible to cite, for example, glass hollow microbeads, ceramic hollow microbeads, resin hollow microbeads and the like, and heat-treated microbeads in each of which a core portion where a heat-decomposable foaming agent is encapsulated is covered with a shell portion formed of a thermally expandable material (the shell portion that is thermally expanded while maintaining a granular shape with evaporation of the foaming agent).

As the above described heat-decomposable foaming agent, a heat-decomposable foaming agent with a foaming temperature of 120°C or higher is preferable, and a heat-decomposable foaming agent with a foaming temperature of 150 to 210°C is more preferable.

As a heat-decomposable foaming agent, it is possible to cite one or more selected from, for example, an azodicarbonamide foaming agent, dinitrosopentamethylene tetramine foaming agent, oxybisbenzenesulfonylhydrazide foaming agent, sodium bicarbonate foaming agent and the like, and aliphatic hydrocarbon.

The rubber composition coating layer preferably contains 5 to 50% by mass of the above described hollow microcapsules, and more preferably contains 10 to 30% by mass of the above described hollow microcapsules, when converted to a solid content.

The rubber composition coating layer contains the above described hollow microcapsules in the above described ratio, and thereby it is possible to easily control the pore ratio in the resulting rubber layer within a desired range, and easily form the rubber layer having a desired density, and having a desired flexibility and friction coefficient.

Furthermore, the rubber composition coating layer may contain a vulcanizing agent and a vulcanization accelerator. The vulcanizing agent is preferably contained in a large amount so as to increase a vulcanization density, and in the case of sulfur vulcanization, a sulfur compound amount is preferably 1.5 to 4.5 g (1.5 to 4.5 phr (parts per hundred rubber)) for 100 gram of polymer that is a rubber component.

Furthermore, as the vulcanization accelerator, it is preferable to use a high-speed vulcanization accelerator that rises with a time to T50 within 4 minutes according to curast data (150°C). Note that the time to T50 according to the curast data (150°) means a time required until a vulcanization degree of rubber reaches T50 (elapsed time until reaching 50% of maximum torque) when vulcanization is performed at 150°C by using a curast testing machine (JSR curast meter III made by Nichigo Shoji Co., Ltd.).

Further, the rubber layer preferably has a closed cell rate of 30% or more, and more preferably has a closed cell rate of 50% or more, though the rubber layer is not particularly limited.

In the present application documents, the closed cell rate of the rubber layer means a value obtained by obtaining a volume of a closed cell part by using an air comparison pycnometer (930 type made by Toshiba Beckman Co., Ltd.) and calculating the closed cell rate by an expression below.

$$\text{Closed cell rate (\%)} = \text{Closed cell part volume (cm}^3\text{)} / \text{Apparent volume (cm}^3\text{)} \times 100$$

Further, "apparent volume" in the above described expression means a value obtained from a product of the thickness of the rubber layer obtained from the arithmetic mean value of the thicknesses at 10 spots by using the aforementioned linear gauge, and a surface area of the rubber layer.

Note that the above described air comparison pycnometer is for obtaining a volume of closed cells from a volume change when an object to be measured is disposed in water and a water pressure is raised, and is for causing water to enter in cells by raising water pressure to cause a volume change to measure the volume amount of the closed cell part from the change amount because water hardly enters into the cells in the case of closed cells, while the cells formed in the object to be measured are continuous cells, water easily enters in the cells, and volume change does not occur even when the water pressure is raised.

In the disc brake shim according to the present invention, the porosity of the rubber layer is within the above described range, and therefore, it is possible to obtain the rubber layer that has a desired density, and has a desired flexibility and friction coefficient.

Further, the closed cell rate of the rubber layer is within the above described range, and thereby control of the above described porosity in manufacturing becomes easy, and it is possible to provide the disc brake shim in which the above described density, flexibility and friction coefficient are easily controlled.

When a chemically decomposable (thermally decomposable) foaming agent is simply dispersed in the rubber layer to form pores, a part of decomposed gas escapes from the rubber layer, or pores tend to be formed into continuous cell shape, so that it becomes very difficult to control the porosity (pore ratio) and the closed cell rate of the resulting rubber layer, the thickness of the rubber layer tends to vary, and vibration control performance tends to vary.

In contrast to this, in the disc brake shim according to the present invention, the pores in the rubber layer are formed of hollow microcapsules, so that in addition to that cells hardly escape from the rubber layer, closed pores are easily formed, and for this reason, it is possible to easily provide the rubber layer in which the pore ratio and the thickness of the rubber layer are easily controlled.

In the disc brake shim according to the present invention, it is possible to form the rubber layer, for example, by dissolving a rubber composition containing respective desired amounts of polymer and hollow microcapsules in an organic solvent to prepare a coating liquid, applying the coating liquid to a metal sheet to be a base material layer, and fixing the coating liquid.

The above described organic solvent is not limited as long as it can dissolve the above described rubber composition, but it is preferable to use an organic solvent prepared by mixing an ester solvent in a ratio of 10 to 90% by mass with respect to 10 to 90% by mass of aromatic hydrocarbon solvent (ketone type is also possible) such as toluene. Furthermore, as the coating liquid, a coating liquid that is prepared by dissolving the above described rubber composition in the above described organic solvent so that the solid content concentration is 10 to 60% by mass is preferable.

A coating method of the coating liquid containing the rubber composition is not particularly limited, but the coating liquid is preferably applied by a skimmer coater, a roll coater or the like that can control a coating thickness.

After the coating liquid is applied, heat treatment is preferably performed at 60 to 150°C for 3 to 15 minutes to dry the solvent, thereafter, heat treatment is preferably performed at 150 to 220°C for 3 to 15 minutes to crosslink the rubber component, and the rubber layer is fixed while being formed.

At this time, it is preferable to select a type of microcapsules to be used and adjust a compound ratio so that the porosity and the closed cell rate of the resulting rubber layer have desired values.

Inside the rubber layer obtained by the above described treatment, many pores corresponding to cavity portions (hollow portions) of the hollow microcapsules are formed.

In the disc brake shim according to the present invention, a plurality of pores derived from the hollow microcapsules are provided inside the rubber layer, so that it is possible to easily control the porosity and the closed cell rate in the rubber layer, and further the thickness of the rubber layer as compared with the case in which pores are provided inside the rubber layer by using a chemically decomposable (thermally decomposable) foaming agent, and for this reason, in the present invention, it is possible to provide the disc brake shim that is easy to manufacture and has excellent quality stability.

As a specific mode of the disc brake shim according to the present invention, it is possible to cite the first disc brake shim according to the present invention as described above, and here, the first disc brake shim according to the present invention has a base material layer formed of a metal sheet, and the above described rubber layer that is laminated and disposed on at least a part of a main surface on one side of the base material layer to be an outermost layer at a time of arrangement.

In the first disc brake shim according to the present invention, the above described rubber layer is preferably oriented to face a pad material or a pressing member, at the time of arrangement.

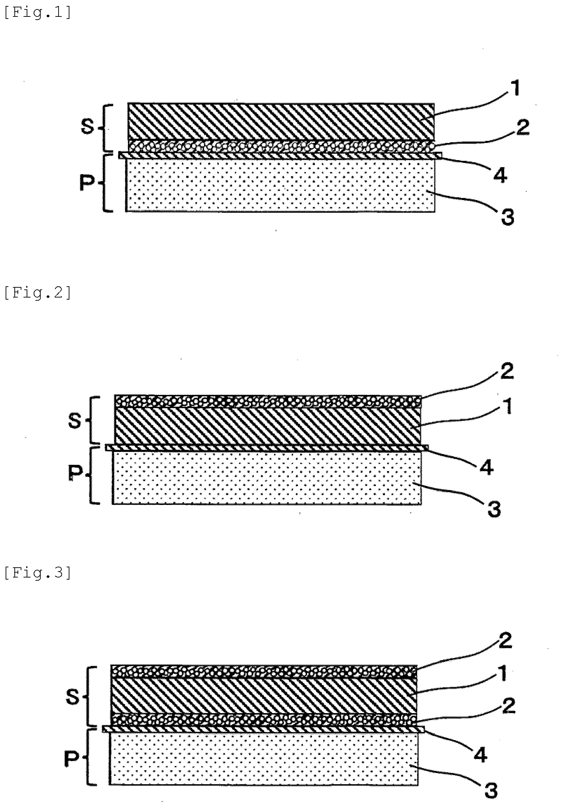

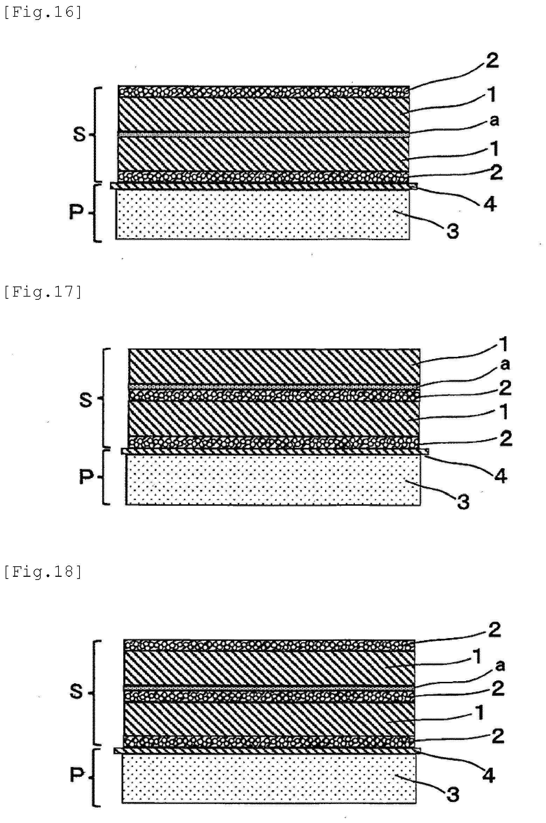

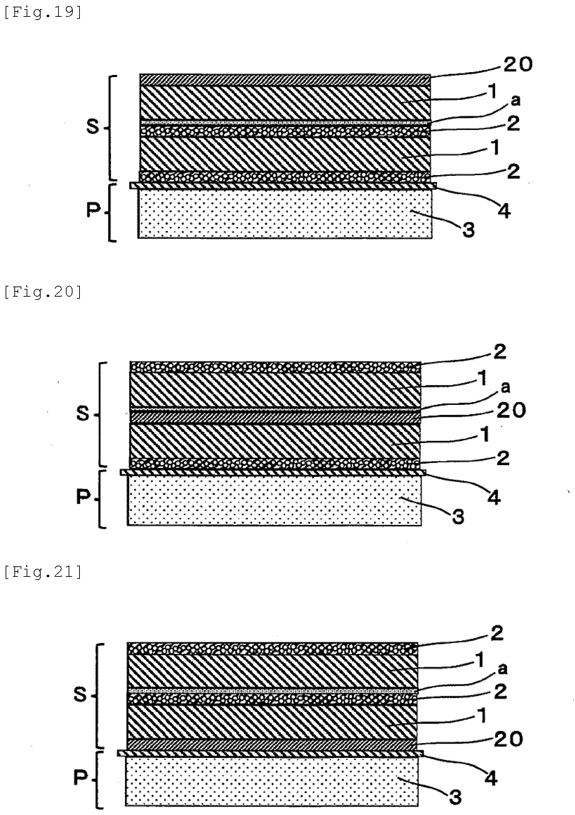

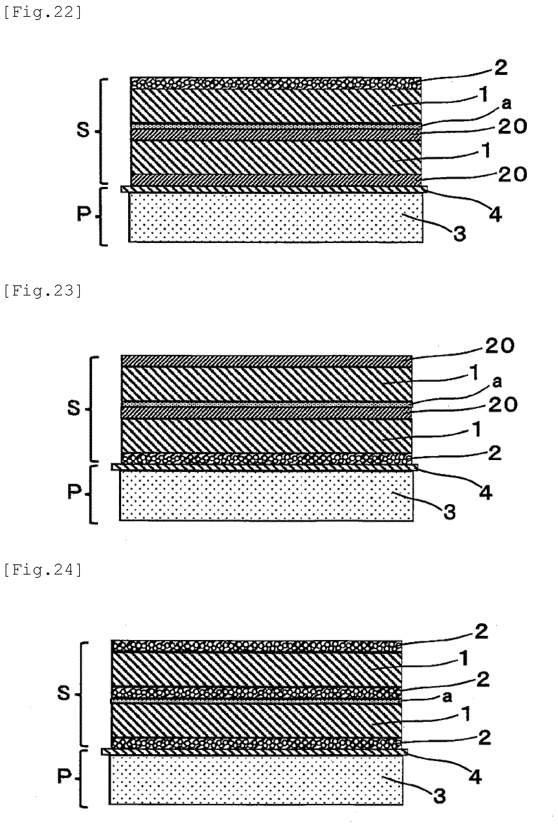

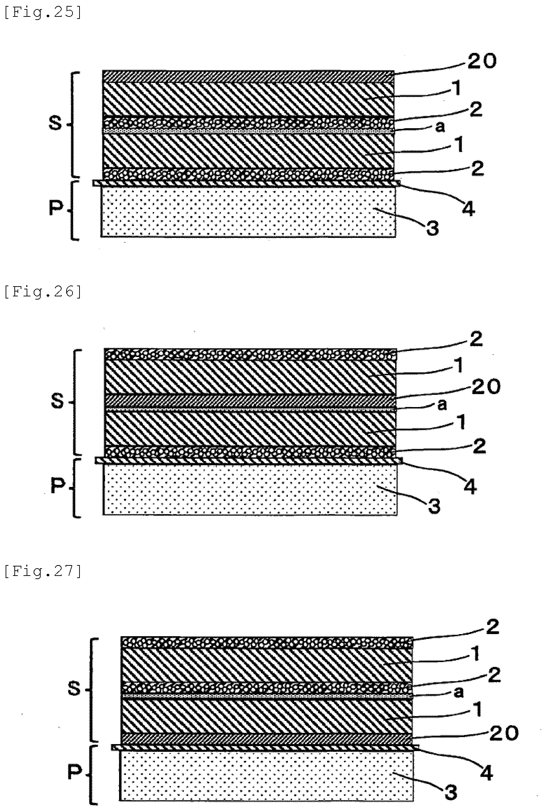

Hereinafter, an exemplary mode of the first disc brake shim according to the present invention will be described by using Figure 1 to Figure 34.

Figure 1 to Figure 3 are vertical sectional views showing exemplary modes of the first disc brake shim according to the present invention.

Figure 1 is a vertical sectional view showing an exemplary mode of a disc brake shim S having a base material layer 1 formed of a metal sheet, and a rubber layer 2 that is laminated and disposed on a main surface on one side of the base material layer, the rubber layer being an outermost layer once arranged, and as shown in Figure 1, in the present exemplary mode, the disc brake shim S is oriented so that the rubber layer 2 faces a pad material P formed of a brake pad 3 and a back metal 4 at the time of arrangement.

In the present exemplary mode, in a braking time, the disc brake shim S is pressed (in a lower direction from an upper side in Figure 1) by a pressing member such as a piston that is provided in a caliper, and it is considered that not only the rubber layer 2 forming the disc brake shim S hardly transmits vibration of the brake pad 3 and the like because the rubber layer 2 has a low density with a plurality of pores, but also the rubber layer 2 deforms to follow the vibration of the brake pad 3 and the like to easily convert the vibration into thermal energy because the rubber layer 2 has flexibility, and the rubber layer 2 can easily convert vibration of the brake pad 3 and the like into frictional heat because the rubber layer 2 further has a high friction coefficient.

Consequently, according to the first disc brake shim according to the present invention shown in Figure 1, it is possible to effectively suppress occurrence of vibration and squeal.

Figure 2 is also a vertical sectional view showing an exemplary mode of the disc brake shim S having the base material layer 1 formed of a metal sheet, and a rubber layer 2 that is laminated on the main surface on one side of the base material layer to be an outermost layer at the time of arrangement, and as shown in Figure 2, in the present exemplary mode, the disc brake shim S is attached so that the rubber layer 2 faces a pressing member (not illustrated) at the time of arrangement.

In the present exemplary mode, in the braking time, the disc brake shim S is pressed (in a lower direction from an upper side in Figure 2) by the pressing member such as a piston provided in a caliper, and it is considered that not only the rubber layer 2 forming the disc brake shim S hardly transmits vibration of the brake pad 3 and the like because the rubber layer 2 has a low density with a plurality of pores, but also the rubber layer 2 deforms to follow the vibration of the brake pad 3 and the like to easily convert the vibration into thermal energy because the rubber layer 2 has flexibility, and the rubber layer 2 can easily convert vibration of the brake pad 3 and the like into frictional heat because the rubber layer 2 further has a high friction coefficient.

Consequently, in the disc brake shim according to the present invention shown in Figure 2, it is also possible to effectively suppress vibration and squeal.

In the first disc brake shim according to the present invention, the rubber layer can be laminated and disposed on a part of the main surface on at least one side of the base material layer formed of the metal sheet, and is preferably laminated and disposed on the entire main surface on one side of the base material layer formed of the metal sheet (as illustrated in Figure 1 and Figure 2).

In the first disc brake shim according to the present invention, rubber layers may be laminated and disposed on main surfaces on both sides of the base material layer formed of the metal sheet, and may be respectively laminated and disposed on the entire main surfaces on both sides of the base material layer formed of the metal sheet.

Figure 3 is a vertical sectional view showing an exemplary mode of a disc brake shim S having a base material layer 1 formed of a metal sheet, and rubber layers 2 and 2 that are respectively laminated on main surfaces on both sides of the base material layer to be outermost layers at a time of arrangement, and as shown in Figure 3, in the present exemplary mode, the disc brake shim S is oriented so that the rubber layers 2 and 2 respectively face a pressing member (not illustrated) and a pad material P formed of a brake pad 3 and a back metal 4 at the time of arrangement.

The first disc brake shim according to the present invention according to the exemplary mode shown in Figure 3 should be referred to as a modified exemplary mode of the disc brake shims according to the exemplary modes shown in Figure 1 and Figure 2, and vibration and squeal are more easily suppressed as compared with the disc brake shims according to the exemplary modes shown in Figure 1 and Figure 2.

The first disc brake shim according to the present invention may have a solid rubber layer, in addition to the base material layer formed of a metal sheet, and the rubber layer that is laminated and disposed on at least a part of the main surface on one side of the base material layer to be the outermost layer at the time of arrangement.

In the present application documents, the solid rubber layer means a rubber layer that does not have pores derived from hollow microcapsules or a foaming agent.

A thickness of the solid rubber layer is preferably 25 to 250 $\mu$m, more preferably 50 to 200 $\mu$m, and even more preferably 100 to 180 $\mu$m.

The thickness of the above described solid rubber layer means an arithmetic mean value at a time of measuring thicknesses at 10 spots by using the above described linear gauge.

As a polymer (rubber component) forming the solid rubber layer, one or more selected from nitrile rubber (NBR), hydrogenated nitrile rubber (HNBR), fluororubber, ethylene propylene diene rubber (EPDM) and acrylic rubber, and the like, and one or more selected from nitrile rubber (NBR), hydrogenated nitrile rubber (HNBR), and fluororubber is preferable.

Furthermore, as the above described nitrile rubber (NBR), in order to give oil resistance, a nitrile rubber with an AN value (content of acrylonitrile group in NBR) of 25 to 50 is preferable, and a nitrile rubber with an AN value of 30 to 45 is more preferable.

Furthermore, the solid rubber layer may contain a vulcanizing agent and a vulcanization accelerator. The vulcanizing agent is preferably contained in a large amount so as to increase a vulcanization density, and in the case of sulfur vulcanization, a sulfur compound amount is preferably 1.5 to 4.5 g (1.5 to 4.5 phr (parts per hundred rubber)) for 100 gram of polymer that is a rubber component.

Furthermore, as the vulcanization accelerator, it is preferable to use a vulcanization accelerator at a high rate with a time to T50 rising within 4 minutes according to curast data (150°C).

In the disc brake shim according to the present invention, it is possible to form the solid rubber layer by, for example, dissolving a rubber composition containing a desired amount of polymer in an organic solvent to prepare a coating liquid, applying the coating liquid to an object to be coated such as the base material layer, and fixing the coating liquid.

The organic solvent is not limited as long as it can dissolve the above described rubber composition, but it is preferable to use an organic solvent prepared by mixing an ester solvent in a ratio of 10 to 90% by mass with respect to 10 to 90% by mass of aromatic hydrocarbon solvent (ketone type is also possible) such as toluene. Furthermore, as the coating liquid, a coating liquid that is prepared by dissolving the above described rubber composition in the above described organic solvent so that the solid content concentration is 10 to 60% by mass is preferable.

A coating method of the coating liquid containing the rubber composition is not particularly limited, but the coating liquid is preferably coated by a skimmer coater, a roll coater or the like that can control a coating thickness.

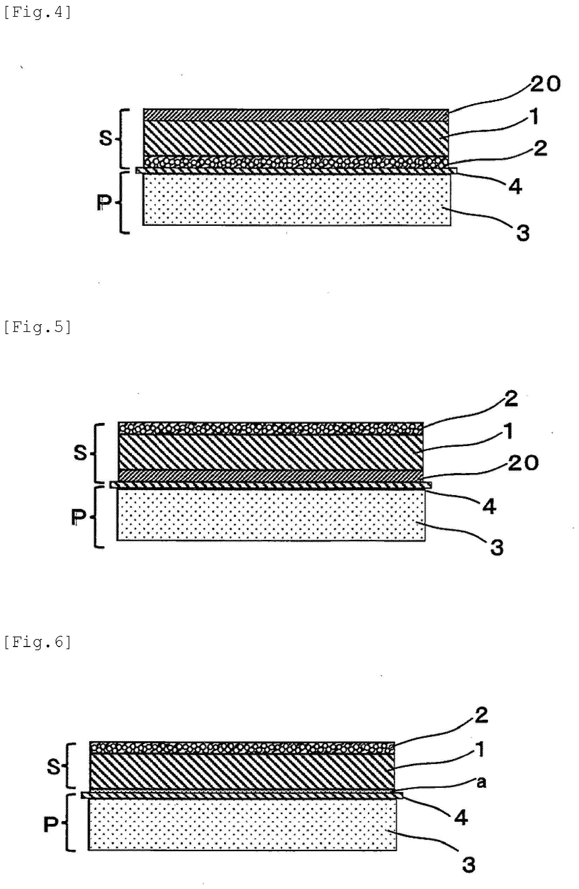

Figure 4 is a vertical sectional view showing an exemplary mode of a disc brake shim S having a base material layer 1 formed of a metal sheet, a rubber layer 2 that is laminated on a main surface on one side of the base material layer, and a solid rubber layer 20 that is laminated on a main surface on an opposite side of the above described base material layer, the rubber layer being an outermost layer once arranged, and as shown in Figure 4, in the present exemplary mode, the disc brake shim S is attached to face a pad material P formed of a brake pad 3 and a back metal 4 at the time of arrangement.

The first disc brake shim according to the present invention according to the exemplary mode shown in Figure 4 should be referred to as a modified exemplary mode of the disc brake shim according to the exemplary mode shown in Figure 1, and suppresses vibration and squeal more easily by further having the solid rubber layer 20 as compared with the disc brake shim according to the exemplary mode shown in Figure 1.

Figure 5 is a vertical sectional view showing an exemplary mode of the disc brake shim S having a base material layer 1 formed of a metal sheet, a rubber layer 2 that is laminated on a main surface on one side of the base material layer, and a solid rubber layer 20 that is laminated on a main surface on an opposite side of the above described base material layer, and as shown in Figure 5, in the present exemplary mode, a disc brake shim S is oriented so that the rubber layer 2 faces a pressing member (not illustrated) at a time of arrangement.

The first disc brake shim according to the present invention according to the exemplary mode shown in Figure 5 should be referred to as a modified exemplary mode of the disc brake shim according to the exemplary mode shown in Figure 2, and suppresses vibration and squeal more easily by further having the solid rubber layer 20, as compared with the disc brake shim according to the exemplary mode shown in Figure 2.

The first disc brake shim according to the present invention may have an adhesive layer, in addition to the base material layer formed of a metal sheet, and the rubber layer that is laminated and disposed on at least a part of the main surface on one side of the base material layer to be the outermost layer at the time of arrangement.

As an adhesive forming the adhesive layer, it is possible to cite one or more selected from an acrylic adhesive, silicon adhesive, rubber adhesive, urethane adhesive and the like, and one or more selected from an acrylic adhesive and silicon adhesive is more preferable.

When the adhesive is an acrylic adhesive, one or more selected from a metal chelate crosslinking agent, isocyanate crosslinking agent, epoxy crosslinking agent and the like are preferably further used as a crosslinking agent.

The first disc brake shim according to the present invention has an adhesive layer, and thereby can produce an excellent ability to prevent squeal by an excellent vibration control effect of the adhesive.

Figure 6 to Figure 8 are vertical sectional views each showing an exemplary mode of the first disc brake shim according to the present invention that has an adhesive layer.

The disc brake shims S according to the exemplary modes shown in Figure 6 to Figure 8 should be referred to as modified exemplary modes of the disc brake shims S according to the exemplary modes shown in Figure 2, Figure 3 and Figure 5 respectively, and further have adhesive layers "a" as outermost layers on sides facing to the pad materials P at a time of arrangement in the disc brake shims according to the exemplary modes shown in Figure 2, Figure 3 and Figure 5.

The disc brake shims S shown in Figure 6 to Figure 8 further have the adhesive layers "a", and therefore suppress vibration and squeal more easily as compared with the disc brake shims according to the exemplary modes shown in Figure 2, Figure 3 and Figure 5.

The first disc brake shim according to the present invention may have a plurality of base material layers each formed of a metal sheet.

The first disc brake shim according to the present invention more easily improves vibration control performance as a constraint vibration control structure, by having the plurality of base material layers each formed of a metal sheet.

In this case, as the metal sheet forming the plurality of base material layers respectively, same metal sheet as the aforementioned metal sheet can be cited.

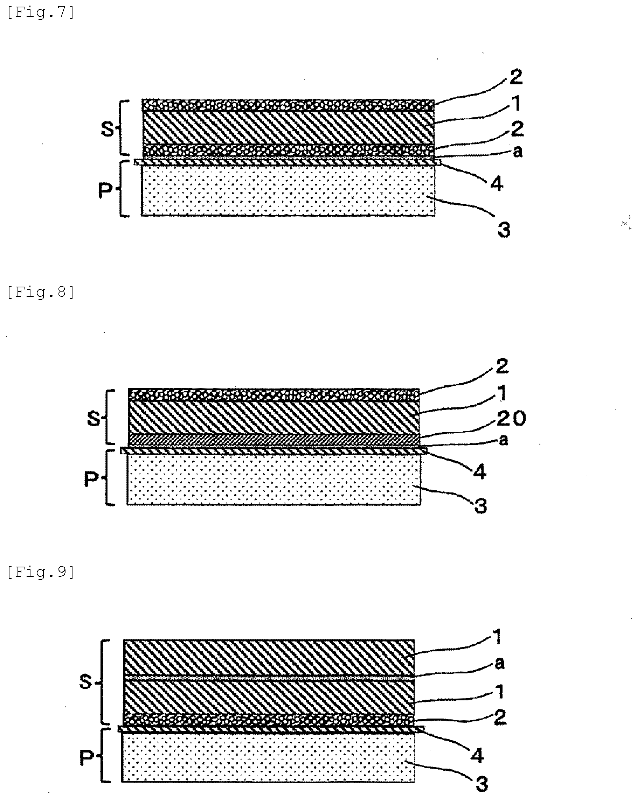

Figure 9 to Figure 29 are vertical sectional views showing exemplary modes of the first disc brake shim according to the present invention having a plurality of base material layers.

Figure 9 is a vertical sectional view showing an exemplary mode of a disc brake shim S that has a lower side base material layer 1 formed of a metal sheet, and a rubber layer 2 that is laminated on a main surface on one side of the lower side base material layer, the rubber layer being an outermost layer once arranged, and further has an upper side base material layer 1 formed of a metal sheet on a main surface on an opposite side from the rubber layer 2, of the lower side base material layer 1 formed of the metal sheet via an adhesive layer "a", and as shown in Figure 9, in the present exemplary mode, the disc brake shim S is oriented so that the rubber layer 2 faces a pad material P formed of a brake pad 3 and a back metal 4 at the time of arrangement.

The disc brake shim S according to the exemplary mode shown in Figure 9 should be referred to as a modified exemplary mode of the disc brake shim S according to the exemplary mode shown in Figure 1, and more easily suppresses vibration and squeal by having the adhesive layer "a" and the plurality of base material layers 1, as compared with the disc brake shim S according to the exemplary mode shown in Figure 1.

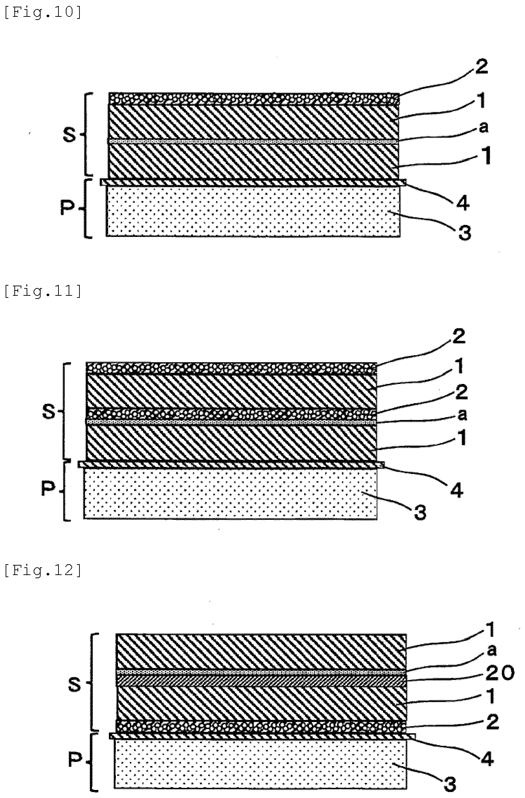

Figure 10 is a vertical sectional view showing an exemplary mode of a disc brake shim S that has an upper side base material layer 1 formed of a metal sheet, and a rubber layer 2 that is laminated on a main surface on one side of the base material layer, the rubber layer being an outermost layer once arranged, and further has a lower side base material layer 1 formed of a metal sheet on a main surface on an opposite side from the rubber layer 2, of the above described upper side base material layer 1 via an adhesive layer "a", and as shown in Figure 10, in the present exemplary mode, the disc brake shim S is oriented so that the rubber layer 2 faces a pressing member (not illustrated) at the time of arrangement.

The disc brake shim S according to the exemplary mode shown in Figure 10 should be referred to as a modified exemplary mode of the disc brake shim S according to the exemplary mode shown in Figure 2, and more easily suppresses vibration and squeal by having the adhesive layer "a" and the plurality of base material layers 1, as compared with the disc brake shim S according to the exemplary mode shown in Figure 2.

Figure 11 is a vertical sectional view showing an exemplary mode of a disc brake shim S that has an upper side base material layer 1 formed of a metal sheet, and rubber layers 2 and 2 that are laminated on main surfaces on both sides of the base material layer, and further has a lower side base material layer 1 formed of a metal sheet on a main surface of the rubber layer 2 (shown on a lower side of the drawing) to a pad material P side at a time of arrangement via an adhesive layer "a", and as shown in Figure 11, in the present exemplary mode, the disc brake shim S is oriented so that the rubber layer 2 (shown on an upper side of the drawing) faces a pressing member (not illustrated) at the time of arrangement.

The disc brake shim S according to the exemplary mode shown in Figure 11 should be referred to as a modified exemplary mode of the disc brake shim S according to the exemplary mode shown in Figure 3, and more easily suppresses vibration and squeal by having the adhesive layer "a" and the plurality of base material layers 1, as compared with the disc brake shim S according to the exemplary mode shown in Figure 3.

Figure 12 is a vertical sectional view showing an exemplary mode of a disc brake shim S that has a lower side base material layer 1 formed of a metal sheet, and a rubber layer 2 that is laminated on a main surface on one side of the base material layer, and further has a solid rubber layer 20, an adhesive layer "a" and an upper side base material layer 1 formed of a metal sheet sequentially on a main surface on an opposite side from the rubber layer 2, of the above described base material layer 1, and as shown in Figure 12, in the present exemplary mode, the disc brake shim S is oriented so that the rubber layer 2 faces a pad material P.

The disc brake shim S according to the exemplary mode shown in Figure 12 should be referred to as a modified exemplary mode of the disc brake shim S according to the exemplary mode shown in Figure 4, and more easily suppresses vibration and squeal by having the adhesive layer "a" and the plurality of base material layers 1, as compared with the disc brake shim S according to the exemplary mode shown in Figure 4.

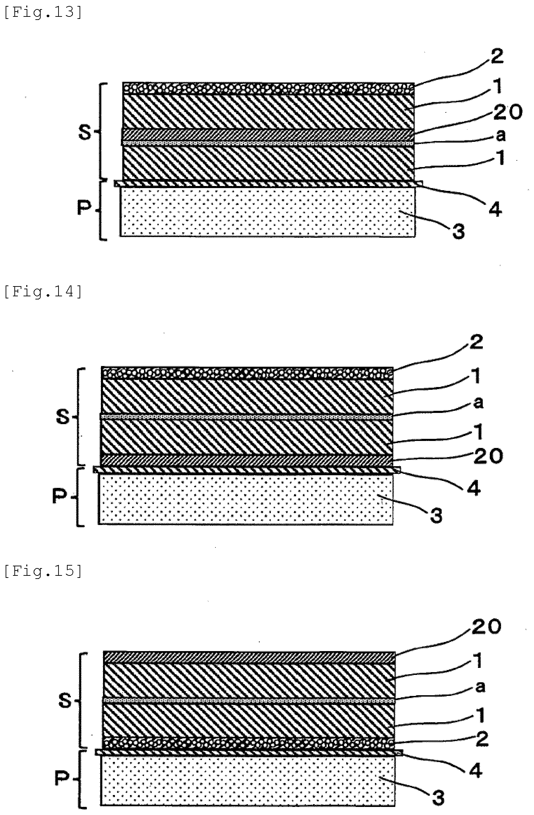

Figure 13 is a vertical sectional view showing an exemplary mode of a disc brake shim S that has an upper side base material layer 1 formed of a metal sheet, and a rubber layer 2 that is laminated on a main surface on one side of the base material layer, and further has a solid rubber layer 20, an adhesive layer "a" and a lower side base material layer 1 formed of a metal sheet sequentially on a main surface on an opposite side of the above descried upper side base material layer 1, and as shown in Figure 13, in the present exemplary mode, the disc brake shim S is oriented so that the rubber layer 2 faces a pressing member (not illustrated) at a time of arrangement.

The disc brake shim S according to the exemplary mode shown in Figure 13 should be referred to as a modified exemplary mode of the disc brake shim S according to the exemplary mode shown in Figure 5, and more easily suppresses vibration and squeal by having the adhesive layer "a" and the plurality of base material layers 1, as compared with the disc brake shim S according to the exemplary mode shown in Figure 5.

In each of the disc bake shims S according to exemplary modes shown in Figure 14 to Figure 29, as reference signs denoting respective constituent layers, reference signs corresponding to the reference signs and numbers that are used in each of Figure 1 to Figure 13 are assigned. In the disc brake shims S according to the exemplary modes shown in Figure 14 to Figure 29, it becomes easier to suppress vibration and squeal by having a plurality of base material layers 1 and further having adhesive layers "a" and the like, as compared with the disc brake shims S shown in Figure 1 to Figure 5.

The first disc brake shim according to the present invention may be a base shim or a cover shim, in a laminated shim in which the cover shim is laminated and disposed on the base shim.

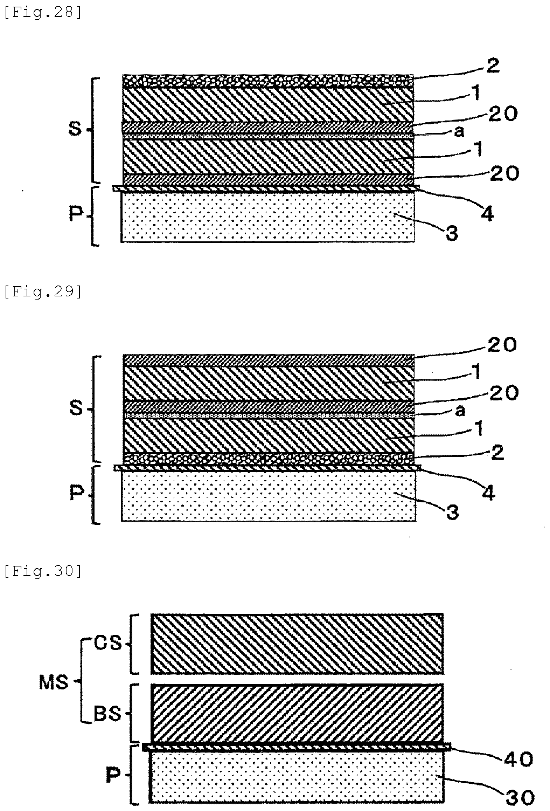

For example, the first disc brake shim according to the present invention may be a base shim BS or a cover shim CS in a laminated shim MS in which the cover shim CS is laminated on the base shim BS, in a vertical sectional view of an exemplary mode of use of a disc brake shim according to the present invention illustrated in Figure 30.

In this case, only either one of the base shim and the cover shim forming the laminated shim may be the first disc brake shim according to the present invention, or both of the base shim and the cover shim that form the laminated shim may be the first disc brake shim according to the present invention.

Note that in the present application documents, the base shim that forms the laminated shim means a shim that is disposed on a pad material side at the time of arrangement, and the cover shim that forms the laminated shim means a shim that is oriented on a pressing member side at the time of arrangement. Furthermore, in the present application documents, the cover shim and the base shim means the cover shim and the base shim that are in a state in which entire joined surfaces of both of them are not chemically or physically fixed, but in a state in which they are adjacently disposed.

When the base shim (the base shim BS illustrated in Figure 30) that forms the laminated shim is the first disc brake shim according to the present invention, the rubber layer that is laminated on the main surface on one side of the base material layer forming the base shim to be the outermost layer at the time of arrangement is preferably attached to face the pad material (the pad material P illustrated in Figure 30) at the time of arrangement.

Furthermore, when the cover shim (the cover shim CS illustrated in Figure 30) forming the laminated shim is the first disc brake shim according to the present invention, the rubber layer that is laminated on the main surface on one side of the base material layer forming the cover shim to be the outermost layer at the time of arrangement is preferably oriented to face the pressing member (a top surface side of the cover shim CS illustrated in Figure 30) at the time of arrangement.

When only the base shim that forms the laminated shim is the first disc brake shim according to the present invention, the structure of the cover shim can be properly selected from the conventionally known cover shims and is not particularly limited.

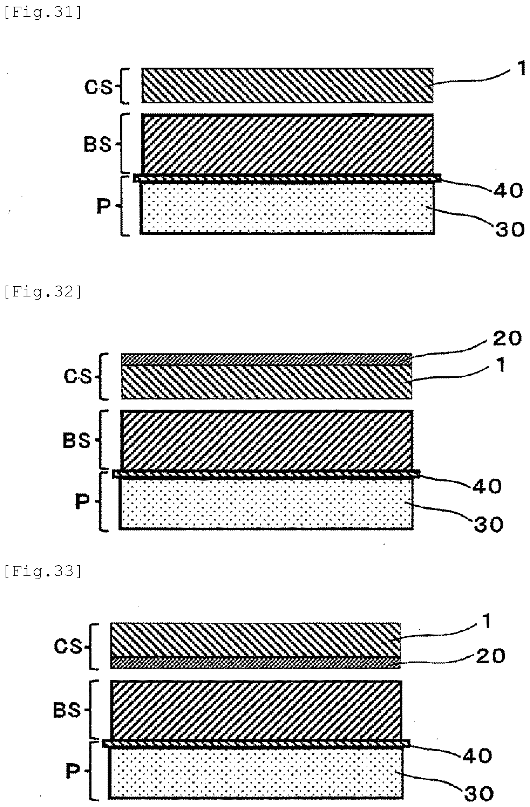

For example, as illustrated in Figure 31, a base shim BS that forms a laminated shim is the first disc brake shim according to the present invention, and as a cover shim CS, a cover shim that is formed of a base material layer 1 formed of a metal sheet can be cited.

Furthermore, as illustrated in each of Figure 32 and Figure 33, a base shim BS that forms a laminated shim is the first disc brake shim according to the present invention, and as a cover shim CS, it is possible to cite a cover shim in which a solid rubber layer 20 is laminated and fixed onto a main surface on one side of a base material layer 1 formed of a metal sheet.

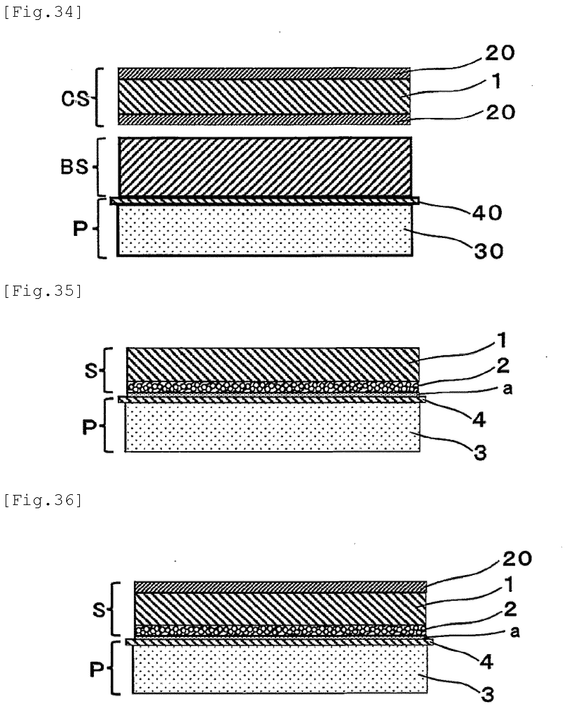

Furthermore, as illustrated in Figure 34, a base shim BS forming a laminated shim is the first disc brake shim according to the present invention, and as a cover shim CS, it is possible to cite a cover shim in which solid rubber layers 20 and 20 are respectively laminated and fixed onto main surfaces on both sides of a base material layer 1 formed of a metal sheet.

As the base material layers formed of the metal sheets and the solid rubber layers of the above described cover shims, it is possible to cite the base material layer and the solid rubber layer that are the same as described above respectively.

As a specific mode of the disc brake shim according to the preset invention, it is possible to cite the second disc brake shim according to the present invention as described above other than the first disc brake shim according to the present invention, and here, the second disc brake shim according to the present invention is formed of a laminated structure with three or more layers having at least a base material layer formed of a metal sheet, and the rubber layer that is laminated and disposed on a main surface on one side of the base material layer, the rubber layer being disposed as an intermediate layer of the above described laminated structure.

The second disc brake shim according to the present invention is formed of a laminated structure with three or more layers, and the rubber layer is disposed as the intermediate layer. Here, the intermediate layer means a layer that is located on either one of the inner sides except for an outermost layer, of the plurality of constituent layers that are three or more layers.

Hereinafter, an exemplary mode of the second disc brake shim according to the present invention will be described by using Figure 35 to Figure 45.

The second disc brake shim according to the present invention may have an adhesive layer in addition to the base material layer formed of a metal sheet, and the rubber layer that is laminated and disposed on the main surface on one side of the base material layer.

As the adhesive that forms the adhesive layer, the same adhesives as described above can be cited.

Hereinafter, an exemplary mode of the second disc brake shim according to the present invention will be described.

Figure 35 is a vertical sectional view showing an exemplary mode of the second disc brake shim according to the present invention having an adhesive layer.

Figure 35 is a vertical sectional view showing an exemplary mode of a disc brake shim S formed of a laminated structure with three layers having a base material layer 1 formed of a metal sheet, a rubber layer 2 that is laminated and disposed on a main surface on one side of the base material layer, and an adhesive layer "a" that is laminated and disposed on a main surface on an opposite side from the base material layer 1, of the rubber layer 2, and as shown in Figure 35, the disc brake shim S according to the present exemplary mode has the base material layer 1 and the adhesive layer "a" as outermost layers, and has the rubber layer 2 as an intermediate layer between the base material layer 1 and the adhesive layer "a".

In the present exemplary mode, the disc brake shim S is pressed by the pressing member such as a piston provided in a caliper (in a downward direction from an upper side in Figure 35) during braking, and it is considered that not only the rubber layer 2 forming the disc brake shim S hardly transmits vibration of the brake pads 3 and the like because the rubber layer 2 has a low density with a plurality of pores, but also the rubber layer 2 deforms to follow the vibration of the brake pads 3 and the like to easily convert the vibration into thermal energy because the rubber layer 2 has flexibility.

Consequently, according to the second disc brake shim according to the present invention shown in Figure 35, it is possible to effectively suppress occurrence of vibration and squeal.

The disc brake shim according to the present invention may have a solid rubber layer in addition to the base material layer formed of a metal sheet, and the rubber layer that is laminated and disposed on the main surface on one side of the base material layer.

In the present application documents, details of the solid rubber layer and a method for forming the solid rubber layer are the same as described above.

Figure 36 is a vertical sectional view showing an exemplary mode of the disc brake shim S in which a solid rubber layer 20 is further laminated and disposed on a main surface on an opposite side from the rubber layer 2, of the base material layer 1, in the exemplary mode shown in Figure 35.

As shown in Figure 36, in the present exemplary mode, the disc brake shim S is formed of a laminated structure with four layers in which the solid rubber layer 20, the base material layer 1, the rubber layer 2 and the adhesive layer "a" are sequentially laminated and disposed, and fixed, and has the rubber layer 2 as an intermediate layer between the base material layer 1 and the adhesive layer "a".

In the present exemplary mode, the disc brake shim S is also pressed by a pressing member such as a piston provided in the caliper (in a downward direction from an upper side in Figure 36) during braking, and it is considered that not only the rubber layer 2 forming the disc brake shim S hardly transmits vibration of the brake pads 3 and the like because the rubber layer 2 has a low density with a plurality of pores, but also the rubber layer 2 deforms to follow the vibration of the brake pads 3 and the like to easily convert the vibration into thermal energy because the rubber layer 2 has flexibility, and further, the rubber layer 2 can easily convert the vibration of the brake pads 3 and the like into frictional heat because the rubber layer 2 has a high friction coefficient.

The disc brake shim S according to the exemplary mode shown in Figure 36 further has the solid rubber layer 20 and therefore can suppress occurrence of vibration and squeal even more, as compared with the disc brake shim S according to the exemplary mode shown in Figure 35.

The second disc brake shim according to the present invention may have a plurality of base material layers formed of a metal sheet.

The second disc brake shim according to the present invention has a plurality of base material layers formed of a metal sheet, and thereby more easily improves vibration control performance as a constraint vibration control structure.

In this case, as the metal sheet that forms each of the plurality of base material layers, a same metal sheet as described above can be cited.

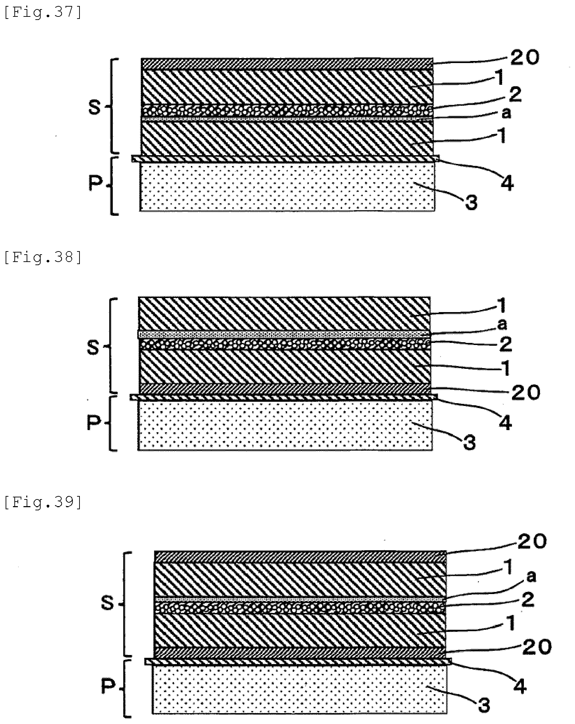

Figure 37 is a vertical sectional view showing an exemplary mode of the disc brake shim S in which a base material layer 1 formed of a metal sheet is further laminated and disposed on a main surface on an opposite side from the rubber layer 2, of the adhesive layer "a", in the exemplary mode shown in Figure 36.

As shown in Figure 37, in the present exemplary mode, the disc brake shim S is formed of a laminated structure with five layers in which a solid rubber layer 20, an upper side base material layer 1 formed of a metal sheet, a rubber layer 2, an adhesive layer "a", and a lower side base material layer 1 formed of a metal sheet are sequentially laminated and disposed in this order (in a downward direction from an upper part in the drawing) and fixed, and has the rubber layer 2 as an intermediate layer between the upper side base material layer 1 and the adhesive layer "a".

In the present exemplary mode, the disc brake shim S is also pressed by a pressing member such as a piston provided in a caliper (in the downward direction from an upper side in Figure 37) during braking, and it is considered that not only the rubber layer 2 forming the disc brake shim S hardly transmits vibration of brake pads 3 and the like because the rubber layer 2 has a low density with a plurality of pores, but also the rubber layer 2 deforms to follow the vibration of the brake pads 3 and the like to easily convert the vibration into thermal energy because the rubber layer 2 has flexibility.

The disc brake shim S according to the exemplary mode shown in Figure 37 further has the base material layer 1, and therefore can suppress occurrence of vibration and squeal even more, as compared with the disc brake shim S according to the exemplary mode shown in Figure 36.

Figure 38 is a vertical sectional view of a disc brake shim S according to another mode, in the second disc brake shim according to the present invention.

The disc brake shim S shown in Figure 38 is formed of a laminated structure with five layers in which an upper side base material layer 1 formed of a metal sheet, an adhesive layer "a", a rubber layer 2, a lower side base material layer 1 formed of a metal sheet, and a solid rubber layer 20 are sequentially laminated and disposed (in a downward direction from an upper part in the drawing) in this order and fixed, and has the rubber layer 2 as an intermediate layer between the lower side base material layer 1 and the adhesive layer "a".

In the present exemplary mode, the disc brake shim S is also pressed (in the downward direction from an upper side in Figure 38) by a pressing member such as a piston provided in a caliper during braking, and it is considered that not only the rubber layer 2 forming the disc brake shim S hardly transmits vibration of brake pads 3 and the like because the rubber layer 2 has a low density with a plurality of pores, but also the rubber layer 2 deforms to follow the vibration of the brake pads 3 and the like to easily convert the vibration into thermal energy because the rubber layer 2 has flexibility.

The disc brake shim S according to the exemplary mode shown in Figure 38 further has the solid rubber layer 20 and the plurality of base material layers 1 and therefore can suppress occurrence of vibration and squeal even more, as compared with the disc brake shim S according to the exemplary mode shown in Figure 35.

Figure 39 is a vertical sectional view of a disc brake shim S according to still another mode, in the second disc brake shim according to the present invention.

The disc brake shim S shown in Figure 39 is formed of a laminated structure with six layers in which an upper side solid rubber layer 20, an upper side base material layer 1 formed of a metal sheet, an adhesive layer "a", a rubber layer 2, a lower side base material layer 1 formed of a metal sheet, and a lower side solid rubber layer 20 are sequentially laminated and disposed (in a downward direction from an upper part in the drawing) in this order and fixed, and has the rubber layer 2 as an intermediate layer between the lower side base material layer 1 and the adhesive layer "a".

In the present exemplary mode, the disc brake shim S is also pressed (in the downward direction from an upper side in Figure 39) by a pressing member such as a piston provided in a caliper during braking, and it is considered that not only the rubber layer 2 forming the disc brake shim S hardly transmits vibration of the brake pads 3 and the like because the rubber layer 2 has a low density with a plurality of pores, but also the rubber layer 2 deforms to follow the vibration of the brake pads 3 and the like to easily convert the vibration into thermal energy because the rubber layer 2 has flexibility.

The disc brake shim S according to the exemplary mode shown in Figure 39 further has the upper side solid rubber layer 20 and therefore can suppress occurrence of vibration and squeal even more, as compared with the disc brake shim S according to the exemplary mode shown in Figure 38.

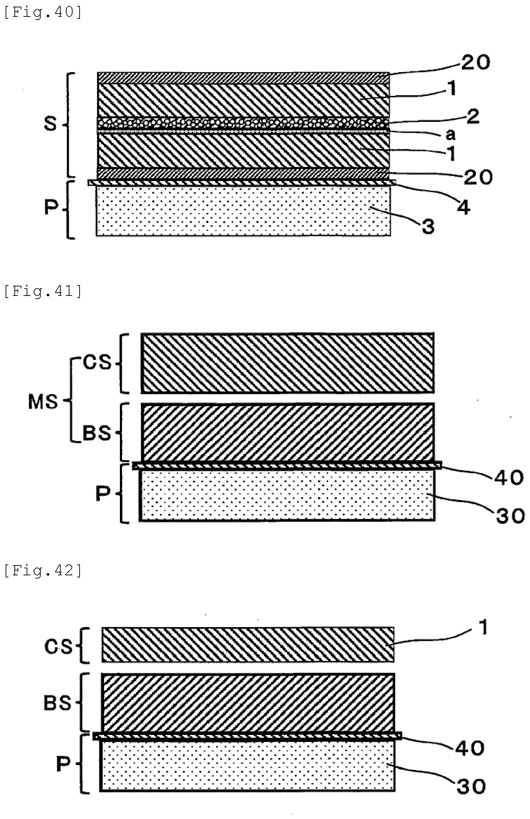

Figure 40 is a vertical sectional view of a disc brake shim S according to still another mode in the second disc brake shim according to the present invention.

The disc brake shim S shown in Figure 40 is formed of a laminated structure with six layers in which an upper side solid rubber layer 20, an upper side base material layer 1 formed of a metal sheet, a rubber layer 2, an adhesive layer "a", a lower side base material layer 1 formed of a metal sheet, and a lower side solid rubber layer 20 are sequentially laminated and disposed (in a downward direction from an upper part in the drawing) in this order and fixed, and has the rubber layer 2 as an intermediate layer between the upper side base material layer 1 and the adhesive layer "a".

In the present exemplary mode, the disc brake shim S is also pressed (in the downward direction from an upper side in Figure 40) by a pressing member such as a piston provided in a caliper during braking, and it is considered that not only the rubber layer 2 forming the disc brake shim S hardly transmits vibration of brake pads 3 and the like because the rubber layer 2 has a low density with a plurality of pores, but also the rubber layer 2 deforms to follow the vibration of the brake pads 3 and the like to easily convert the vibration into thermal energy because the rubber layer 2 has flexibility.

The disc brake shim S according to the exemplary mode shown in Figure 40 further has the lower side solid rubber layer 20 and therefore can suppress occurrence of vibration and squeal even more, as compared with the disc brake shim S according to the exemplary mode shown in Figure 37.

The second disc brake shim according to the present invention may be a base shim or cover shim, in a laminated shim in which the cover shim is laminated and disposed on the base shim.

For example, the second disc brake shim may be a base shim BS or a cover shim CS in a laminated shim MS in which the cover shim CS is laminated and disposed on the base shim BS, in a vertical sectional view showing an outline of an exemplary mode of use of the second disc brake shim according to the present invention illustrated in Figure 41.

In this case, only either one of the base shim and the cover shim that form the laminated shim may be the second disc brake shim according to the present invention, or both the base shim and the cover shim that form the laminated shim may be the second disk brake shims according to the present invention.

Note that as described above, in the present application documents, the base shim that forms the laminated shim means a shim disposed on a pad material side at a time of arrangement, and the cover shim that forms the laminated shim means a shim disposed on a pressing member side at the time of arrangement. Further, in the preset application documents, the cover shim and the base shim mean the cover shim and the base shim that are not in a state in which entire joint surfaces of both of the shims are not chemically or physically fixed, but in a state of being disposed adjacently to each other.

When only the base shim forming the laminated shim is the disc brake shim according to the present invention, the structure of the cover shim can be properly selected from the conventionally known cover shims, and is not particularly limited.

For example, as illustrated in Figure 42, it is possible to cite a laminated shim in which a base shim BS forming the laminated shim is the disc brake shim according to the present invention, and a cover shim CS is formed of a base material layer 1 formed of a metal sheet.

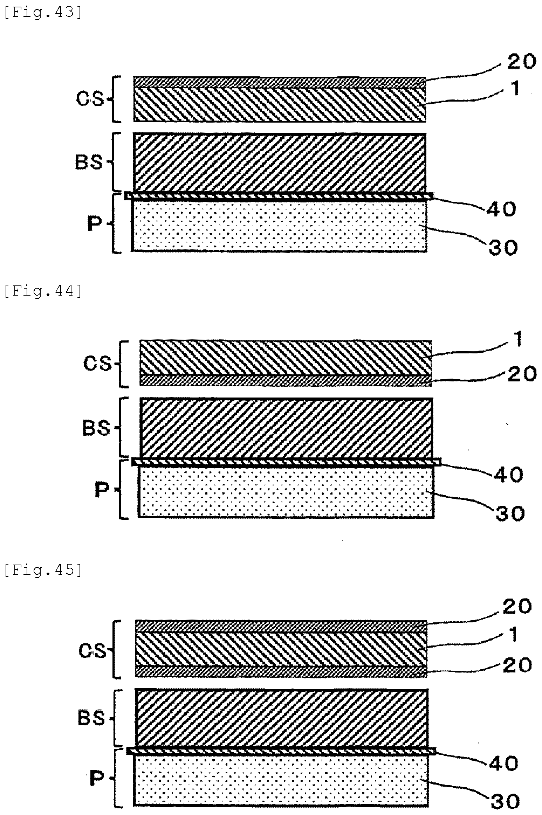

Further, as illustrated in each of Figure 43 and Figure 44, it is possible to cite a laminated shim in which a base shim BS forming the laminated shim is the disc brake shim according to the present invention, and a cover shim CS is the cover shim in which a solid rubber layer 20 is laminated and fixed onto a main surface on one side of a base material layer 1 formed of a metal sheet.

Furthermore, as illustrated in Figure 45, a base system BS forming a laminated shim is the disc brake shim according to the present invention, and as a cover shim CS, it is possible to cite a cover shim in which solid rubber layers 20 and 20 are respectively laminated and fixed onto main surface on both sides of a base material layer 1 formed of a metal sheet.

As the base material layers formed of the metal sheets and the solid rubber layers of the above described cover shims, it is possible to cite the base material layer and the solid rubber layer that are same as described above respectively.

According to the present invention, it is considered that not only the rubber layer provided on the base material layer hardly transmits vibration of a brake pad and the like because the rubber layer has a low density with a plurality of pores, but also the rubber layer deforms to follow vibration of the brake pad and the like to easily convert the vibration into thermal energy because the rubber layer has flexibility, and the rubber layer can easily convert vibration of the outer member into a frictional heat because the rubber layer has a high friction coefficient.

Further, according to the present invention, a plurality of pores derived from hollow microcapsules are provided inside the rubber layer, and thereby it is possible to easily control the pore ratio in the rubber layer and the thickness of the rubber layer as compared with the case in which pores are provided inside the rubber layer by using a chemically decomposable (thermally decomposable) foaming agent.

Consequently, according to the present invention, it is possible to provide a novel disc brake shim that can effectively suppress occurrence of vibration and squeal, is easy to manufacture, and has excellent quality stability.

Next, a disc brake according to the present invention will be described.

The disc brake according to the present invention is a disc brake having pad materials disposed on both sides in an axial direction of a disc rotor, and shims that are adjacently disposed on opposite sides from the disc rotor, of the pad materials,
wherein each of the shims is the disc brake shim according to the present invention.

As the disc brake according to the present invention, a disc rotor having a mode as shown in Figure 46 can be illustrated.

A disc brake B illustrated in Figure 46 is a disc brake having brake pads 30 and 30 that are arranged on both sides in an axial direction of a disc rotor 60 that rotates integrally with a wheel, and shims S and S that are adjacently disposed on opposite sides from the disc rotor 60, of the pad materials 30 and 30, and at least one of the above described shims S and S is the disc brake shim according to the present invention.

The disc brake B illustrated in Figure 46 is structured such that it applies brakes by pressing the brake pads 30 and 30 that are arranged on both sides in the axial direction of the disc rotor 60 that rotates integrally with a wheel with a pressing member 70 formed of a piston and the like by hydraulic pressure of a brake oil 80 disposed in a caliper 50, and pressing the brake pads 30 and 30 from both sides of the disc rotor 60.

In the disc brake according to the present invention, details of the disc brake shim are as described above.

When the shim forming the disc brake according to the present invention is formed by laminating and disposing a cover shim on a base shim, and the above described cover shim is the first disc brake shim according to the present invention, the rubber layer forming the cover shim is preferably oriented to face a pressing member side (the pressing member 70 illustrated in Figure 46) that forms the cover shim.

When the shim forming the disc brake according to the present invention is formed by laminating and disposing a cover shim on a base shim, and the above described base shim is the first disc brake shim according to the present invention, the rubber layer forming the base shim is preferably oriented to face a pad material side (a brake pad 30 side illustrated in Figure 46).

Furthermore, in the disc brake according to the present invention, as specific examples of the other component members such as the disc rotor, and the brake pads, conventionally known component members can be cited, and the other component members are not particularly limited.

According to the present invention, it is considered that not only the rubber layer forming the disc brake shim hardly transmits vibration of a brake pad and the like because the rubber layer has a low density with a plurality of pores, but also the rubber layer deforms to follow vibration of the brake pad and the like to easily convert the vibration into thermal energy because the rubber layer has flexibility, and furthermore, the rubber layer can easily convert vibration of the outer member into a frictional heat because the rubber layer has a high friction coefficient.

Consequently, according to the present invention, it is possible to provide a novel disc brake that can effectively suppress occurrence of vibration and squeal.

Next, the present invention will be more specifically described by citing examples, but these examples are only illustrations, and do not intend to restrict the present invention.

(Example 1)

A rubber compound formed from components shown in Table 1, and compounded to have 60% by mass of a polymer, 12% by mass of hollow microcapsules, a total of 3% by mass of a vulcanizing agent and a vulcanization accelerator, and 25% by mass of a filler was dissolved in a mixed liquid of toluene and ethyl acetate (toluene : ethyl acetate = 70:30 in a volume ratio) so as to have 40% by mass of a solid content concentration to prepare a coating liquid.

Subsequently, the above described coating liquid was applied onto the entire main surface on one side of the base material formed of a stainless steel sheet (SUS sheet) with a thickness of 0.5 mm to have a thickness of 250 μm by using a roll coater to form a rubber compound coating layer, and thereafter heating treatment was applied thereto at 120°C for 10 minutes to evaporate toluene and ethyl acetate and dry it, whereby the rubber layer was fixed and formed. Thereafter, heating treatment was performed at 200°C for 10 minutes, and thereby the disc brake shim material (width 240 mm, length 15 mm, thickness 0.6 mm, porosity of the rubber layer 41%, closed cell rate of the rubber layer 37%) having the rubber layer with a thickness of 100 μm on the main surface on one side of the base material formed of an SUS sheet was obtained.

The obtained disc brake shim material was provided for measurement of vibration dampening property evaluation as follows, as a test piece of the disc brake shim that is oriented to face the pad material at the time of arrangement.

<Vibration Dampening Property Evaluation>

In the state in which the obtained disc brake shim material was disposed so that the rubber layer abuts on a support stand of a stainless steel sheet with a thickness of 5 mm of a loss coefficient measuring device (MS18143 made by Bruel & Kjar Sound & Vibration Measurement A/S), a loss coefficient η was measured under the conditions described below in conformity with the central exciting method (constrained steel sheet method) specified in JIS G0602.

Results are shown in Table 2.

Note that the higher the loss coefficient η, the higher the vibration dampening properties.

(Measurement Conditions)

   Temperature range: -20°C to 120°C
   Loss coefficient calculation method: antiresonance point half width method
   Mode: secondary
   Tightening torque: 4N·m

(Example 2)

A rubber compound formed from the components shown in Table 1, and compounded to contain 60% by mass of a polymer, 12% by mass of hollow microcapsules, a total of 3% by mass of a vulcanizing agent and a vulcanization accelerator, and 25% by mass of a filler was dissolved in a mixed liquid of toluene and ethyl acetate (toluene : ethyl acetate = 70:30 in a volume ratio) so as to have 40% by mass of a solid content concentration to prepare a coating liquid.

Subsequently, the above coating liquid was applied onto the entire main surface on one side of the base material formed of a stainless steel sheet (SUS sheet) with a thickness of 0.5 mm to have a thickness of 250 μm by using a roll coater to form a rubber compound coating layer, and thereafter, heating treatment was applied at 120°C for 10 minutes to evaporate toluene and ethyl acetate and dry it, whereby the rubber layer was fixed and formed. Thereafter, heating treatment was performed at 200°C for 10 minutes, and thereby an intermediate material having the rubber layer with a thickness of 100 μm on the main surface on one side of the base material formed of an SUS sheet was obtained.

A stainless steel sheet (SUS sheet) with a thickness of 0.5 mm was bonded onto a rubber layer side of the obtained intermediate material, whereby the disc brake shim material (width 240 mm, length 15 mm, thickness 0.6 mm, porosity of the rubber layer 41%, closed cell rate of the rubber layer 37%) formed of a three-layer structure of the SUS sheet/rubber layer/SUS sheet was obtained.

The obtained disc brake shim material was provided for measurement of vibration dampening property evaluation similarly to example 1, as a test piece of the disc brake shim that is oriented to face the pad material at the time of arrangement.

(Comparative Example 1)

A rubber compound formed from the components shown in Table 1, and compounded to contain 40% by mass of a polymer, a total of 3% by mass of a vulcanizing agent and a vulcanization accelerator, and 57% by mass of a filler was dissolved in a mixed liquid of toluene and ethyl acetate (toluene : ethyl acetate = 70:30 in a volume ratio) so as to have 40% by mass of a solid content concentration to prepare a coating liquid.

Subsequently, the above described coating liquid was applied onto the entire main surface on one side of the base material formed of a stainless steel sheet (SUS sheet) with a thickness of 0.5 mm to have a thickness of 250 $\mu$m by using a roll coater to form a rubber compound coating layer, and thereafter heating treatment was applied thereto at 120°C for 10 minutes to evaporate toluene and ethyl acetate and dry it, whereby the rubber layer was fixed and formed. Thereafter, heating treatment was performed at 200°C for 10 minutes, and thereby the disc brake shim material (width 240 mm, length 15 mm, thickness 0.6 mm) having a solid rubber layer with a thickness of 100 $\mu$m on the main surface on one side of the base material formed of an SUS sheet was obtained.

<Vibration Damping Property Evaluation>

A loss coefficient $\eta$ was measured under the same conditions as in example 1, except that the obtained disc brake shim material was oriented so that the solid rubber layer abuts on the support stand of a stainless steel sheet with a thickness of 5 mm of the loss coefficient measuring device (MS18143 made by Bruel & Kjar Sound & Vibration Measurement A/S).

[Table 1]

| | Rubber compound component | | | | | | Porosity (%) | Rubber layer thickness (μm) (after heating) | Closed cell rate (%) |
|---|---|---|---|---|---|---|---|---|---|
| | Polymer (rubber component) | | | Hollow microcapsule | Vulcanizing agent | Vulcanization accelerator | | | |
| | Type | AN value | Mooney value | | | | | | |
| Example 1 | Acrylonitrile butadiene rubber (NBR) | 33 | 50 | Hollow glass bead (glass material: sodium borosilicate glass system) | Sulfur | Sulfenamide system | 41 | 100 | 37 |
| Example 2 | Acrylonitrile butadiene rubber (NBR) | 33 | 50 | Hollow glass bead (grass material: sodium borosilicate glass system) | Sulfur | Sulfenamide system | 41 | 100 | 37 |
| Comparative example 1 | Acrylonitrile butadiene rubber (NBR) | 43 | 80 | - | Sulfur | Thiazole system | - | 100 | - |

EP 4 269 479 A1

[Table 2]

| Temperature (°C) | Comparative example 1 Loss coefficient $\eta$(-) | Example 1 Loss coefficient $\eta$(-) | Example 2 Loss coefficient $\eta$(-) |
|---|---|---|---|
| -20 | 0.0123 | 0.0211 | 0.0692 |
| -15 | 0.0115 | 0.0219 | 0.0677 |
| -10 | 0.0121 | 0.0252 | 0.0670 |
| -5 | 0.0140 | 0.0326 | 0.0662 |
| 0 | 0.0157 | 0.0421 | 0.0672 |
| 5 | 0.0170 | 0.0506 | 0.0670 |
| 10 | 0.0203 | 0.0534 | 0.0671 |
| 15 | 0.0247 | 0.0508 | 0.0663 |
| 20 | 0.0315 | 0.0487 | 0.0652 |
| 25 | 0.0292 | 0.0455 | 0.0645 |
| 30 | 0.0301 | 0.0427 | 0.0635 |
| 35 | 0.0288 | 0.0406 | 0.0635 |
| 40 | 0.0277 | 0.0375 | 0.0635 |
| 45 | 0.0262 | 0.0362 | 0.0634 |
| 50 | 0.0248 | 0.0349 | 0.0633 |
| 55 | 0.0243 | 0.0342 | 0.0629 |
| 60 | 0.0232 | 0.0325 | 0.0628 |
| 65 | 0.0211 | 0.0312 | 0.0614 |
| 70 | 0.0208 | 0.0297 | 0.0608 |
| 75 | 0.0207 | 0.0287 | 0.0601 |
| 80 | 0.0206 | 0.0278 | 0.0592 |
| 85 | 0.0206 | 0.0268 | 0.0581 |
| 90 | 0.0198 | 0.0261 | 0.0567 |
| 95 | 0.0191 | 0.0257 | 0.0548 |
| 100 | 0.0188 | 0.0252 | 0.0520 |
| 105 | 0.0188 | 0.0253 | 0.0492 |
| 110 | 0.0183 | 0.0265 | 0.0463 |
| 115 | 0.0182 | 0.0294 | 0.0431 |
| 120 | 0.0180 | 0.0325 | 0.0400 |

According to Table 1, the disc brake shim according to the present invention obtained in each of example 1 and example 2 has the base material layer formed of a metal sheet, and the rubber layer that is laminated and disposed on at least a part of the main surface on one side of the base material layer, contains pores derived from a plurality of hollow microcapsules inside, and has flexibility, whereby it is considered that the rubber layer deforms to follow vibration of the brake pads and the like to easily convert the vibration into thermal energy, and further the rubber layer can easily convert the vibration of the brake pads and the like into frictional heat because the rubber layer has a high friction coefficient, so that it is found that excellent braking performance (vibration dampening performance) is shown under the above described temperatures, and occurrence of squeal is favorably suppressed.

In contrast to the above, according to Table 1, it is found that the disc brake shim obtained in comparative example 1 has the base material layer formed of a metal sheet, and the solid rubber layer that is laminated and disposed on the main surface on one side of the base material layer to be the outermost layer at the time of arrangement, and therefore the loss coefficient is low in the range of all the temperatures of measurement, so that under these temperatures, the disc brake shim is inferior in braking performance, and cannot suppress occurrence of squeal.

[Industrial Applicability]

According to the present invention, it is possible to provide a novel disc brake shim and disc brake that can effectively suppress occurrence of vibration and squeal, is easy to manufacture and has excellent quality stability.

[Reference Signs List]

| | |
|---|---|
| 1 | base material layer |
| 2 | rubber layer |
| 3 | brake pad |
| 4 | back metal |
| 10 | base material layer |
| 20 | solid rubber layer |
| 30 | brake pad |
| 40 | back metal |
| 50 | caliper |
| 60 | disc rotor |
| 70 | pressing member |
| 80 | brake oil |
| a | adhesive layer |
| S | disc brake shim |
| P | pad material |
| MS | laminated shim |
| CS | cover shim |
| BS | base shim |

## Claims

1. A disc brake shim comprising a base material layer formed of a metal sheet, and a rubber layer that is laminated and disposed on at least a part of a main surface on one side of the base material layer and contains pores derived from a plurality of hollow microcapsules inside.

2. The disc brake shim according to claim 1 comprising a base material layer formed of a metal sheet, and the rubber layer that is laminated and disposed on at least a part of a main surface on one side of the base material layer, the rubber layer being an outermost layer once arranged.

3. The disc brake shim according to claim 2, wherein a thickness of the rubber layer is 30 to 200 $\mu$m.

4. The disc brake shim according to claim 2, wherein the rubber layer is a heat-treated product of a rubber composition coating layer containing 40 to 70% by mass of polymer with a Mooney value of 10 to 70, and 5 to 50% by mass of hollow microcapsules, in solid content conversion.

5.  The disc brake shim according to claim 2, wherein the rubber layer is oriented to face a pad material or a pressing member at a time of arrangement.

6. The disc brake shim according to claim 2, wherein the disc brake shim is a base shim or a cover shim in a laminated shim in which the cover shim is laminated and disposed on the base shim.

7. The disc brake shim according to claim 1 comprising a laminated structure with three or more layers including at least a base material layer formed of a metal sheet, and the rubber layer laminated and disposed on a main surface on one side of the base material layer, the rubber layer being disposed as an intermediate layer of the laminated structure.

8. The disc brake shim according to claim 7, wherein a thickness of the rubber layer is 30 to 200 $\mu$m.

9. The disc brake shim according to claim 7, wherein the rubber layer is a heat-treated product of a rubber composition coating layer containing 40 to 70% by mass of polymer with a Mooney value of 10 to 70, and 5 to 50% by mass of hollow microcapsules, in solid content conversion.

10. The disc brake shim according to claim 7, wherein the disc brake shim is a base shim or a cover shim in a laminated shim in which the cover shim is laminated and disposed on the base shim.

11. A disc brake including pad materials on both sides in an axial direction of a disc rotor, and shims on opposite sides from the disc rotor, of the pad materials adjacently,
wherein each of the shims is the disc brake shim according to claim 1.

[Fig.1]

[Fig.2]

[Fig.3]

[Fig.4]

[Fig.5]

[Fig.6]

[Fig.7]

[Fig.8]

[Fig.9]

[Fig.10]

[Fig.11]

[Fig.12]

[Fig.13]

[Fig.14]

[Fig.15]

[Fig.16]

[Fig.17]

[Fig.18]

[Fig.19]

[Fig.20]

[Fig.21]

[Fig.22]

[Fig.23]

[Fig.24]

[Fig.25]

[Fig.26]

[Fig.27]

[Fig.28]

[Fig.29]

[Fig.30]

[Fig.31]

[Fig.32]

[Fig.33]

[Fig.34]

[Fig.35]

[Fig.36]

[Fig.37]

[Fig.38]

[Fig.39]

[Fig.40]

[Fig.41]

[Fig.42]

[Fig.43]

[Fig.44]

[Fig.45]

[Fig.46]

[Fig.47]

## INTERNATIONAL SEARCH REPORT

| International application No. |
| --- |
| **PCT/JP2021/046209** |

| | |
| --- | --- |
| **A.** | **CLASSIFICATION OF SUBJECT MATTER** |

*C08J 5/14*(2006.01)i; *F16D 65/092*(2006.01)i; *F16D 65/095*(2006.01)i
FI:   F16D65/095 J; F16D65/092 B; C08J5/14 CEQ

According to International Patent Classification (IPC) or to both national classification and IPC

| | |
| --- | --- |
| **B.** | **FIELDS SEARCHED** |

Minimum documentation searched (classification system followed by classification symbols)

    C08J5/14; F16D65/092; F16D65/095

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2000-35066 A (YUUSAN GASKET KK) 02 February 2000 (2000-02-02)<br>    page 3, column 3, line 40 to page 7, column 11, line 17, fig. 1-7 | 1-11 |
| X | JP 7-71519 A (NICHIAS CORP.) 17 March 1995 (1995-03-17)<br>    paragraphs [0022]-[0031], fig. 4 | 1-11 |
| A | JP 2013-228095 A (AKEBONO BRAKE CORP.) 07 November 2013 (2013-11-07)<br>    entire text, all drawings | 1-11 |
| A | JP 2002-295548 A (NICHIAS CORP.) 09 October 2002 (2002-10-09)<br>    entire text, all drawings | 1-11 |
| A | JP 2018-165555 A (AKEBONO BRAKE INDUSTRY CO., LTD.) 25 October 2018<br>(2018-10-25)<br>    entire text, all drawings | 1-11 |
| A | Microfilm of the specification and drawings annexed to the request of Japanese Utility Model<br>Application No. 167923/1988 (Laid-open No. 117439/1990) (NOK CORP.) 20 September<br>1990 (1990-09-20), entire text, all drawings | 1-11 |

☐ Further documents are listed in the continuation of Box C.     ☑ See patent family annex.

| | |
| --- | --- |
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **10 February 2022** | **22 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/046209**

| Patent document cited in search report | | | Publication date (day/month/year) | Patent family member(s) | | | Publication date (day/month/year) |
|---|---|---|---|---|---|---|---|
| JP | 2000-35066 | A | 02 February 2000 | US 6170620 B1 column 2, line 50 to column 9, line 24, fig. 1-7 | | | |
| JP | 7-71519 | A | 17 March 1995 | (Family: none) | | | |
| JP | 2013-228095 | A | 07 November 2013 | US 2013/0244039 A1 DE 202013002406 U1 | | | |
| JP | 2002-295548 | A | 09 October 2002 | US 2002/0189910 A1 EP 1245851 A2 | | | |
| JP | 2018-165555 | A | 25 October 2018 | US 2018/0283479 A1 CN 108662043 A | | | |
| JP | 2-117439 | U1 | 20 September 1990 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010031960 A